# FASCICULE DE BREVET EUROPEEN

(11) **EP 2 804 011 B1**
(45) Date de publication et mention de la délivrance du brevet: **31.08.2016**
(21) Numéro de dépôt: 14167307.9
(22) Date de dépôt: 07.05.2014
(51) Int. Cl.: G01S 7/486, G01S 17/89, G01S 17/10

(54) **Dispositif d'illumination laser à obturateur intégré**
Laserbeleuchtungsvorrichtung mit integrierter Verschlussblende
Laser illumination device with built-in shutter

(30) Priorité: 14.05.2013 FR 1301102
(43) Date de publication de la demande: 19.11.2014
(73) Titulaire: Compagnie Industrielle des Lasers Cilas, 45100 Orleans (FR)
(72) Inventeur: Grasser, Régis, 45160 Olivet (FR)
(74) Mandataire: Gevers & Orès

(56) Documents cités:
- EP-A1- 0 844 495
- US-A- 4 920 412
- US-A- 5 907 150
- US-A1- 2011 181 864
- US-B2- 7 733 464
- BENTELL J ET AL: "Flip Chipped INGaAs Photodiode Arrays for Gated Imaging with Eye-Safe Lasers", SOLID-STATE SENSORS, ACTUATORS AND MICROSYSTEMS CONFERENCE, 2007. TRANSDUCERS 2007. INTERNATIONAL, IEEE, PISCATAWAY, NJ, USA, 10 juin 2007 (2007-06-10), pages 1103-1106, XP031216227, ISBN: 978-1-4244-0841-2

## Description

La présente invention concerne un dispositif d'illumination laser à obturateur intégré. Elle concerne également un système d'observation actif comprenant un tel dispositif d'illumination laser, notamment pour des applications de défense et de sécurité.

Dans le cadre de la présente invention, un système d'observation actif est configuré pour illuminer une scène à l'aide d'une source laser, afin d'améliorer la qualité d'une image de ladite scène de l'environnement et/ou pour mettre en évidence certains détails spécifiques, tels que des optiques pointées par exemple.

A cet effet, ledit système actif d'observation comprend une source laser avec une optique spécifique de génération de forme du faisceau et une caméra de réception apte à réaliser une image de la scène illuminée. Une caractéristique d'un système actif tel que considéré est sa capacité à illuminer uniquement une partie restreinte de l'espace.

Pour ce faire, la caméra est sensible à la lumière entrante pour une durée de temps très courte, typiquement entre 0,1 µs et 10µs. Si l'illumination laser utilise également une courte impulsion, la combinaison avec le temps d'exposition court de la caméra résulte en une sélection de photons qui correspondent à une durée de déplacement plutôt restreinte.

Dans ce cas, l'image générée correspond à une partie de l'espace (en distance) par rapport à la position du système actif (typiquement de quelques dizaines à quelques centaines de mètres). Le champ de vision peut ainsi être défini non seulement en plan (selon le plan de vision habituel), mais également selon la distance vers le système actif, c'est-à-dire en volume.

Des caméras présentant des durées d'exposition très courtes ne sont pas fréquentes. De plus, pour obtenir une qualité et/ou un rapport signal/bruit raisonnables, il est nécessaire d'atteindre un certain niveau d'énergie d'image laser pendant la courte durée d'impulsion. Ceci requiert une source laser complexe, chère et souvent peu fiable.

Une manière d'améliorer cette situation est de réaliser une acquisition d'image lors d'une exposition à de multiples impulsions. Ainsi, l'énergie requise pour former une image peut être répartie sur plusieurs impulsions d'énergie relativement faible, en conformité notamment avec la technologie de diodes lasers à semi-conducteur.

Toutefois, des caméras présentant une capacité de multi-exposition sont rares.

Ceci conduit à des systèmes d'observation actifs complexes ou limités.

Par ailleurs, le seul type de caméra permettant une multi-exposition avec une durée d'ouverture très courte est un tube à intensification tel que décrit notamment dans les documents ep 0 844 495 A1, US-5 907 150 et US-7 733 464. Cependant, un tel tube à intensification fonctionne uniquement dans un domaine (800-900µm) relatif à l'infrarouge proche (0.75-1,4 µm) de type NIR (pour « Near InfraRed » en anglais). En revanche, dans le domaine d'infrarouge de courte longueur d'onde (1,4-3 µm) de type SWIR (pour « Short-Wavelength InfraRed » en anglais), les solutions usuelles utilisent des lasers à état solide et une exposition à une impulsion laser unique.

La présente invention a pour objet de remédier à cet inconvénient. Elle concerne un dispositif d'illumination laser à obturateur intégré qui permet de générer une capacité de multi-exposition adaptée à tout type de caméra, et pour toute longueur d'onde dans les domaines NIR et SWIR.

A cet effet, selon l'invention, ledit dispositif d'illumination laser à obturateur intégré, est remarquable en ce que :
- il comporte :
   - un module d'illumination commandable comprenant au moins une source laser, qui est apte à émettre au moins une impulsion laser ;
   - un obturateur rapide commandable susceptible d'être amené, de façon alternative, dans une position ouverte, dans laquelle il laisse passer au niveau d'une zone de passage un rayonnement électromagnétique comprenant au moins ladite impulsion laser, et une position fermée dans laquelle il empêche le passage dudit rayonnement électromagnétique au niveau de ladite zone de passage. Ledit obturateur est orienté par rapport à la direction d'émission de ladite impulsion laser pour recevoir, au niveau de la zone de passage, ladite impulsion laser renvoyée par un élément situé sur ladite direction d'émission ; et
   - une unité de commande qui est activable, qui commande simultanément ledit module d'illumination et ledit obturateur, et qui synchronise la génération d'impulsions laser par le module d'illumination et l'ouverture de l'obturateur de manière à amener ledit obturateur dans la position ouverte, une durée de décalage réglable après la génération d'une impulsion laser, et ceci pendant une durée d'ouverture réglable ; et
- ledit module d'illumination et ledit obturateur rapide, ainsi que de préférence au moins une partie de ladite unité de commande, font partie d'un ensemble présentant une intégrité mécanique.

Ainsi, grâce à l'invention, on obtient un dispositif d'illumination laser à obturateur rapide intégré, qui est autonome et indépendant, en étant réalisé sous forme d'un ensemble présentant une intégrité mécanique, comme précisé ci-dessous. Ce dispositif d'illumination réalise une illumination laser et permet de multiples expositions de courte durée à cette illumination renvoyée par une partie de l'espace, pour tout élément optique (et notamment une caméra) qui est situé derrière ladite zone de passage de l'obturateur intégré.

Ledit dispositif d'illumination laser peut ainsi être associé à une caméra de détection pour former un système d'observation actif, comme précisé ci-dessous. En fonction de la durée de décalage entre la génération de l'impulsion laser par la source laser et l'ouverture dudit obturateur, on peut déterminer la zone de l'espace à l'avant du dispositif que l'on veut analyser. Dans ce cas, la caméra de détection est complètement indépendante dudit dispositif d'illumination laser de sorte que l'on peut utiliser tout type de caméra (et notamment des caméras standard).

La présente invention présente notamment les avantages suivants :
- elle permet d'étendre la capacité de multi-exposition de la gamme NIR à la gamme SWIR ;
- elle augmente fortement les capacités d'une caméra ou d'un capteur associé pour réaliser une génération d'image active ; et
- elle permet des configurations de détection qui seraient impossibles autrement.

Le dispositif conforme à l'invention peut utiliser, dans le module d'illumination, différentes sources laser usuelles et notamment des lasers à semi-conducteur ou des lasers à fibre. Ainsi, le module d'illumination peut être facilement adapté à l'application envisagée. En particulier, l'énergie par image, le champ de vision, et les longueurs d'ondes peuvent être facilement réglés en utilisant une source laser usuelle appropriée, comme précisé ci-dessous.

En outre, avantageusement :
- ledit module d'illumination comprend un moyen de génération de forme du faisceau laser ; et/ou
- ledit module d'illumination laser comprend des moyens permettant d'amener et de maintenir ledit obturateur dans ladite position ouverte.

Par ailleurs, de façon avantageuse, ledit dispositif d'illumination laser comporte, de plus, des moyens d'interface permettant à un opérateur d'activer l'unité de commande, et de paramétrer le dispositif d'illumination laser, en lui permettant notamment de régler la fréquence de l'impulsion laser, ladite durée de décalage et ladite durée d'ouverture.

En outre, avantageusement :
- dans une première variante de réalisation, lesdits moyens d'interface font également partie dudit ensemble présentant une intégrité mécanique et constitué d'un bloc mécanique unique ; et
- dans une seconde variante de réalisation, lesdits moyens d'interface sont déportés, en étant notamment reliés à l'unité de commande par une liaison de transmission de données, par exemple de type filaire ou de préférence de type non filaire (par ondes). Ceci permet à un opérateur qui est éloigné dudit dispositif d'illumination laser de pouvoir l'activer et le régler.

La présente invention concerne également un système d'observation actif, comprenant une caméra susceptible de prendre l'image d'un champ de vision.

Selon l'invention, ce système d'observation actif est remarquable en ce qu'il comporte, de plus, un dispositif d'illumination laser tel que celui précité, et ledit dispositif d'illumination laser est configuré de sorte que la caméra prenne l'image, au travers de la zone de passage de l'obturateur du dispositif d'illumination laser, d'un champ de vision susceptible d'être illuminé par le module d'illumination.

Ainsi, on obtient un système d'observation actif qui permet de générer une capacité de multi-exposition adaptée à tout type de caméra (telle qu'une caméra standard), permettant notamment de réaliser une génération d'image active avec toute longueur d'onde dans les domaines NIR et SWIR. Avantageusement, ledit obturateur rapide est apte à générer des ouvertures de courtes durées de manière à fournir à la caméra une fonction de multi-expositions de courtes durées. Ladite caméra peut continuer à fonctionner de façon usuelle.

En outre, avantageusement, ledit système actif d'observation comporte, de plus, des moyens qui sont configurés pour attacher ledit dispositif d'illumination laser sur ladite caméra.

Par ailleurs, dans un mode de réalisation particulier, lesdits moyens d'interface (de type déporté) font partie d'une unité d'interface de ladite caméra, qui est ainsi commune à la caméra et au dispositif d'illumination laser, bien que ces deux éléments soient deux ensembles unitaires indépendants. Ladite unité d'interface peut également être déportée par rapport à ces deux ensembles unitaires, et par exemple être intégrée dans un poste de commande éloigné.

Par ailleurs, de façon avantageuse, ledit système actif d'observation comporte également des moyens permettant d'amener et de maintenir ledit obturateur dans ladite position ouverte (dans un état passif). Dans ce cas, la caméra faisant partie dudit système actif d'observation peut fonctionner de façon habituelle comme si le dispositif d'illumination laser n'était pas monté sur ladite caméra (alors qu'il est effectivement monté sur cette dernière).

Les figures du dessin annexé feront bien comprendre comment l'invention peut être réalisée. Sur ces figures, des références identiques désignent des éléments semblables.
La figure 1 montre schématiquement un dispositif d'illumination laser à obturateur intégré conforme à l'invention.
La figure 2 est le schéma synoptique du dispositif d'illumination laser à obturateur intégré conforme à l'invention
La figure 3 illustre schématiquement une unité d'interface particulière.

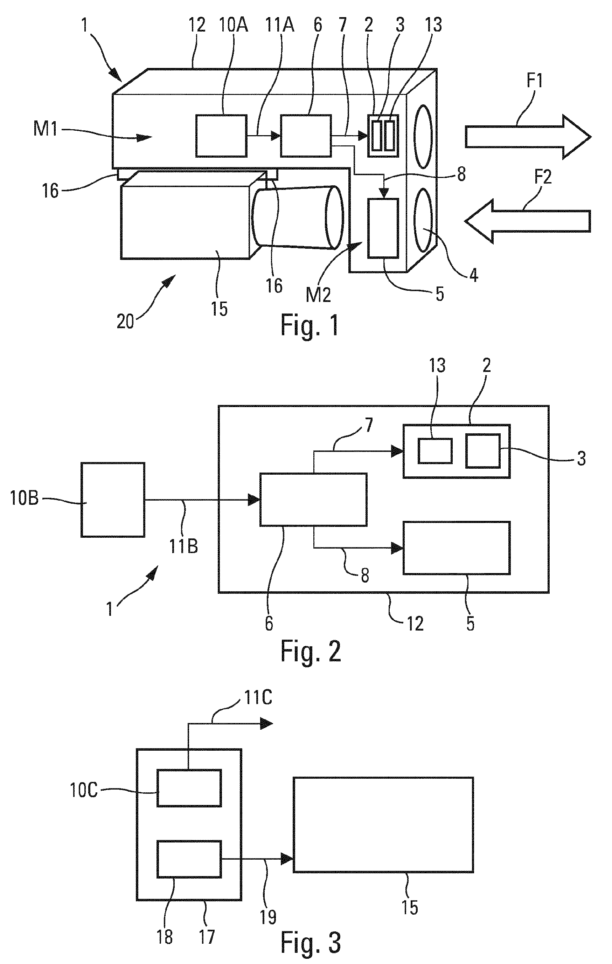

Le dispositif 1 d'illumination laser à obturateur intégré, conforme à l'invention et représenté schématiquement sur figure 1, est susceptible d'être associé à une caméra ou à tout autre capteur usuel pour former un système d'observation actif 20, comme précisé ci-dessous.

Selon l'invention, ledit dispositif 1 d'illumination laser comporte :
- un module d'illumination 2 commandable, qui comprend au moins une source laser 3 qui est apte à émettre au moins une impulsion laser 10, comme illustré par une flèche F1 sur la figure 1 ;
- un obturateur rapide 5 commandable, qui est susceptible d'être amené, de façon alternative :
   - dans une position ouverte, dans laquelle il laisse passer au niveau d'une zone de passage 4, par exemple de forme circulaire, un rayonnement électromagnétique comprenant au moins ladite impulsion laser 10, comme illustré par une flèche F2, après sa réflexion par une scène illuminée par le module d'illumination 2 ; et
   - dans une position fermée, dans laquelle il empêche le passage dudit rayonnement électromagnétique (comprenant ladite impulsion laser 10) au niveau de ladite zone de passage 4 ; et
- une unité de commande 6 qui est activable, qui commande simultanément ledit module d'illumination 2 et ledit obturateur 5 respectivement par l'intermédiaire de liaisons 7 et 8, et qui synchronise la génération d'impulsions laser l0 par le module d'illumination 2 et l'ouverture de l'obturateur 5 de manière à amener ledit obturateur 5 dans la position ouverte, une durée de décalage DR réglable après la génération d'une impulsion laser l0 et ceci pendant une durée d'ouverture DO également réglable.

Ledit module d'illumination 2 et ledit obturateur rapide 5 (ainsi que de préférence au moins une partie de ladite unité de commande 6) font partie d'un seul et même ensemble 12 présentant une intégrité mécanique et comprenant par exemple par un bloc mécanique unique.

De plus, ledit obturateur 5 est orienté par rapport à la direction d'émission (flèche F1) de ladite impulsion laser I0 de manière à pouvoir recevoir au niveau de ladite zone de passage 4 ladite impulsion laser 10 renvoyée par un élément (non représenté) situé selon ladite direction d'émission.

La source laser 3 et l'obturateur 5 sont donc commandés par l'unité de commande 6 pour générer des impulsions laser d'illumination 10 et des ouvertures de l'obturateur 5 qui sont synchronisées (en étant décalées temporairement).

Ledit dispositif d'illumination laser 1 comporte, de plus, des moyens d'interface 10A, 10B, 10C permettant à un opérateur d'activer l'unité de commande 6 via une liaison 11 A, 11 B, 11C de transmission de données, et de paramétrer le dispositif d'illumination laser 1, en lui permettant notamment de régler la fréquence de l'impulsion laser 10, ladite durée de décalage DR et ladite durée d'ouverture DO.

Le dispositif 1 est donc formé de deux modules M1 et M2 :
- un premier module M1 qui correspond au module d'illumination 2 et qui comporte la source d'illumination laser 3 et un moyen 13 usuel de génération de forme du faisceau, ainsi que généralement l'unité de commande électronique 6 ; et
- un second module M2 qui comprend l'obturateur rapide 5 qui est agencé devant un élément de réception optique, notamment une caméra usuelle.

Ainsi, le dispositif d'illumination laser 1 à obturateur rapide intégré est autonome et indépendant. Ce dispositif d'illumination 1 réalise une illumination laser et permet de multiples expositions successives de courte durée à une illumination renvoyée par une partie de l'espace, pour tout élément optique (et notamment une caméra) qui est situé derrière ladite zone de passage 4 de l'obturateur 5. Ledit dispositif d'illumination laser 1 peut ainsi notamment être associé à une caméra de détection 15 pour former un système d'observation actif 20, comme représenté sur la figure 1.

Le dispositif 1 conforme à l'invention peut comporter différents types de source laser 3 et notamment des lasers à semi-conducteur ou des lasers à fibre. Ainsi, le module d'illumination 2 peut être facilement adapté à l'application envisagée. En particulier, l'énergie par image, le champ de vision, et les longueurs d'ondes peuvent être facilement réglés en utilisant une source laser 3 usuelle appropriée.

A titre d'illustration, ledit obturateur 5 peut être formé de manière à s'ouvrir et se fermer à des fréquences élevées (1 khz à 50khz), chaque ouverture durant un temps très court (0,1µs à 10µs). Pour ce faire, ledit obturateur 5 peut comporter au moins une cavité de Fabry-Pérot présentant un écartement réglable, dont une valeur d'écartement dite nominale permet un passage à travers ladite cavité de Fabry-Pérot pour un rayonnement (ou impulsion) laser de fréquence correspondante dite fréquence de résonance, des moyens d'actionnement commandables, de type piézo-électrique, aptes à faire varier ledit écartement, dans un domaine de valeurs d'écartement comprenant ladite valeur nominale, et une unité de commande pour commander lesdits moyens d'actionnement de sorte qu'ils fassent varier l'écartement selon une fonction périodique au cours du temps. La détection peut être de type polarimétrique (ou non) si l'obturateur 5 est divisé en deux ou plusieurs parties sensibles à des états de polarisation différents.

Dans une première variante de réalisation, représentée sur la figure 1, lesdits moyens d'interface 10A font également partie dudit ensemble 12 et sont directement accessibles par un opérateur sur ledit ensemble 12.

Dans une seconde variante de réalisation représentée schématiquement sur la figure 2, lesdits moyens d'interface 10B sont déportés (c'est-à-dire éloignés de l'ensemble 12), en étant reliés à l'unité de commande 6 par une liaison 11B de transmission de données, de type filaire ou de préférence de type non filaire (par ondes). Ceci permet à un opérateur qui est éloigné dudit dispositif d'illumination laser 1 de l'activer et le commander à distance.

La présente invention concerne également un système d'observation actif 20 qui comprend une caméra 15 susceptible de prendre l'image d'un champ de vision, et qui est configuré pour illuminer une scène à l'aide d'une source laser 3, afin d'améliorer la qualité d'une image de ladite scène de l'environnement et/ou pour mettre en évidence certains détails spécifiques, tels que des optiques pointées par exemple.

Ce système d'observation actif 20 comporte donc :
- une caméra 15 qui est susceptible de prendre l'image d'un champ de vision ;
- un dispositif d'illumination laser 1 tel que celui précité ; et
- des moyens 16 (représentés très schématiquement sur la figure 1) qui sont configurés pour attacher ledit dispositif d'illumination laser 1 sur ladite caméra 15. Ces moyens 16 qui font par exemple partie au moins partiellement de l'ensemble 12 peuvent comporter tout type de lien mécanique usuel, qui est par exemple associé à une adaptation de la forme de l'ensemble 12 à celle de la caméra 15.

Dans cette application, le dispositif d'illumination laser 1 est configuré de sorte que la caméra 15 prenne l'image, au travers de la zone de passage 4 de l'obturateur 5 du dispositif d'illumination laser 1, d'un champ de vision susceptible d'être illuminé par le module d'illumination 2.

Dans ce cas, la caméra de détection 15 est complètement indépendante dudit dispositif d'illumination laser 1 de sorte que l'on peut utiliser tout type de caméra 15.

La source laser 3 et l'obturateur 5 sont commandés pour générer des impulsions laser d'illumination 10 et des ouvertures de l'obturateur 5, qui sont synchronisées. En fonction de la durée de décalage DR entre la génération de l'impulsion laser 10 et l'ouverture dudit obturateur 5 et de la durée d'ouverture DO, durées qu'un opérateur peut régler à l'aide des moyens d'interface 10A, 10B, 10C, ledit opérateur peut déterminer la zone de l'espace à l'avant du dispositif 1 qui doit être analysée à l'aide dudit système 20. Les deux modules M1 et M2 coopèrent pour fournir les photons appropriés à la caméra 15.

Plus précisément, la caméra 15 peut ainsi recevoir la lumière entrante pendant une durée de temps très courte (correspondant à la durée d'ouverture de l'obturateur 5), typiquement entre 0,1 µs et 10µs.

La fonction d'exposition à des durées courtes est remplie par l'obturateur rapide 5. Ainsi, le dispositif 1 donne la possibilité de faire des multi-expositions avec des temps très courts à des caméras 15 usuelles (de type standard). La durée d'ouverture de la caméra 15 reste comme d'habitude, plutôt longue, typiquement de quelques millisecondes à quelques dizaines de millisecondes. L'obturateur rapide 5 placé devant la caméra 15 laisse passer la lumière de la scène de la manière et de la durée nécessaires pour obtenir la fonction de multi-expositions recherchée.

Si l'illumination laser utilise également une courte impulsion, la combinaison avec le temps d'exposition court de la caméra 15 (correspondant à la durée d'ouverture de l'obturateur 5) résulte en une sélection de photons qui correspondent à une durée de déplacement plutôt restreinte. Dans ce cas, l'image générée correspond à une partie de l'espace (en distance) par rapport à la position du système actif 20 (typiquement de quelques dizaines à quelques centaines de mètres). Le champ de vision peut ainsi être défini non seulement en plan (selon le plan de vision habituel), mais également selon la distance vers le système actif, c'est-à-dire en volume.

Une exposition multi-impulsion est ainsi possible, quelle que soit la caméra 15. Le système 20 peut traiter tout type de longueurs d'onde dans les spectres NIR et SWIR tant que la caméra 15 est sensible à ce spectre. La caméra 15 peut continuer à fonctionner de façon habituelle.

Par ailleurs, ledit dispositif 1 comporte également des moyens (intégrés et non représentés) qui sont, par exemple, commandés à l'aide desdits moyens d'interface et qui permettent d'amener et de maintenir ledit obturateur 5 dans sa position ouverte (correspondant à un état passif du dispositif 1). Dans ce cas, la caméra 15 faisant partie dudit système actif d'observation 20 peut fonctionner de façon habituelle comme si le dispositif d'illumination laser 1 n'était pas monté sur ladite caméra 15.

Dans un mode de réalisation particulier, lesdits moyens d'interface 10C (de type déporté) peuvent faire partie d'une unité d'interface 17 comprenant des moyens d'interface 18 usuels de ladite caméra 15 (reliés par une liaison 19 à cette dernière). Cette unité d'interface 17 est ainsi commune à la caméra 15 et à l'ensemble 12 du dispositif d'illumination laser 1, bien que ces deux éléments 12 et 15 soient deux ensembles unitaires indépendants et autonomes pour le reste. Ladite unité d'interface 17 commune peut-être montée sur la caméra 15 ou sur l'ensemble 12. Elle peut également être déportée par rapport à ces deux ensembles 12 et 15 unitaires, en étant agencée dans un poste de commande autorisant une commande à distance du système 20.

Concernant le fonctionnement du système 20, un opérateur peut paramétrer, à l'aide des moyens d'interface 10A, 10B, 10C, le dispositif d'illumination laser 1, en lui permettant notamment de régler la fréquence de l'impulsion laser 10, la durée de décalage DR et la durée d'ouverture DO. Il lui suffit ensuite de déclencher un tir à l'aide des moyens d'interface 10A, 10B, 10C, ce tir qui correspond à l'émission d'une impulsion laser 10 étant généralement reproduit périodiquement.

Synchronisé avec la source laser 3, l'obturateur 5 s'ouvre et se referme rapidement à une durée après l'émission correspondant à la durée de décalage DR entrée par l'opérateur (ou correspondant à une valeur préétablie), et ceci pendant une durée d'ouverture DO entrée par l'opérateur (ou correspondant à une valeur préétablie). La caméra 15 dont l'élément optique de détection est agencé derrière la zone de passage 4 de l'obturateur 5 reçoit donc l'impulsion laser l0 qu'a laissée passer l'obturateur 5 durant son ouverture, et elle peut détecter et traiter de façon usuelle cette impulsion laser l0 reçue.

La présente invention présente notamment les avantages suivants :
- elle permet d'étendre la capacité de multi-exposition de la gamme NIR à la gamme SWIR sans développement de capteurs et/ou de caméras 15 spécifiques ;
- elle augmente fortement les capacités d'une caméra 15 ou d'un capteur associé pour réaliser une génération d'image active ; et
- elle permet des configurations de détection qui seraient impossibles autrement.

## Revendications

1. Dispositif d'illumination laser à obturateur intégré, destiné à être associé à une caméra (15) indépendante, ledit dispositif (1) comportant :
• un module d'illumination (2) commandable comprenant au moins une source laser (3), qui est apte à émettre au moins une impulsion laser ;
• un obturateur (5) rapide commandable susceptible d'être amené, de façon alternative, dans une position ouverte, dans laquelle il laisse passer au niveau d'une zone de passage (4) un rayonnement électromagnétique comprenant au moins ladite impulsion laser, et dans une position fermée, dans laquelle il empêche le passage dudit rayonnement électromagnétique au niveau de ladite zone de passage (4) ; et
• une unité de commande (6) qui est activable, qui commande simultanément ledit module d'illumination (2) et ledit obturateur (5), et qui synchronise la génération d'impulsions laser par le module d'illumination (2) et l'ouverture de l'obturateur (5) de manière à amener ledit obturateur (5) dans la position ouverte, une durée de décalage réglable après la génération d'une impulsion laser, et ceci pendant une durée d'ouverture réglable,
**caractérisé en ce qu'**au moins ledit module d'illumination (2), ledit obturateur (5) et ladite unité de commande (6) font partie d'un ensemble (12) présentant une intégrité mécanique, et **en ce que** ledit dispositif d'illumination laser (1) comporte, de plus, des moyens d'attache (16) aptes à attacher ledit ensemble (12) à la caméra (15).

2. Dispositif selon la revendication 1,
**caractérisé en ce que** ledit module d'illumination (2) comprend un moyen (13) de génération de forme de faisceau laser.

3. Dispositif selon l'une des revendications 1 et 2,
**caractérisé en ce qu'**il comporte, de plus, des moyens d'interface (10A, 10B, 10C) permettant à un opérateur d'activer l'unité de commande (6) et de paramétrer le dispositif d'illumination laser (1).

4. Dispositif selon la revendication 3,
**caractérisé en ce que** lesdits moyens d'interface (10A) font partie dudit ensemble (12) présentant une intégrité mécanique.

5. Dispositif selon la revendication 3,
**caractérisé en ce que** lesdits moyens d'interface (10B, 10C) sont déportés par rapport audit ensemble (12) présentant une intégrité mécanique.

6. Dispositif selon l'une quelconque des revendications précédentes, **caractérisé en ce qu'**il comprend des moyens permettant d'amener et de maintenir ledit obturateur (5) dans ladite position ouverte.

7. Système d'observation actif, comprenant une caméra (15) susceptible de prendre l'image d'un champ de vision,
**caractérisé en ce qu'**il comporte, de plus, un dispositif d'illumination laser (1) tel que celui spécifié sous l'une quelconque des revendications 1 à 6, et **en ce que** ledit dispositif d'illumination laser (1) est configuré de sorte que ladite caméra (15) prenne une image, au travers de la zone de passage (4) de l'obturateur (5), d'un champ de vision susceptible d'être illuminé par ledit module d'illumination (2).

8. Système selon la revendication 7,
**caractérisé en ce qu'**il comporte des moyens (16) pour attacher ledit dispositif d'illumination laser (1) sur ladite caméra (15).

9. Système selon l'une des revendications 7 et 8,
**caractérisé en ce que** lesdits moyens d'interface (10C) font partie d'une unité d'interface (17) de ladite caméra (15).

10. Système selon la revendication 9,
**caractérisé en ce que** ladite unité d'interface (17) est déportée.

11. Système selon l'une quelconque des revendications 7 à 10, **caractérisé en ce que** ledit obturateur (5) est apte à générer des ouvertures de courtes durées de manière à fournir à la caméra (15) une fonction de multi-expositions de courtes durées.

## Patentansprüche

1. Eine Laserbeleuchtungsvorrichtung mit integriertem Verschluss, dazu bestimmt, mit einer unabhängigen Kamera (15) assoziiert zu sein, wobei besagte Vorrichtung (1) folgendes umfasst:
- ein steuerbares Beleuchtungsmodul (2), umfassend mindestens einer Laserquelle (3), die in der Lage ist, mindestens einen Laserimpuls auszusenden;
- einen steuerbaren Schnell-Verschluss (5), der abwechselnd in eine geöffnete Position gebracht werden kann, in welcher er in einem Durchgangsbereich (4) eine elektromagnetische Strahlung passieren lässt, die mindestens besagten Laserimpuls umfasst, und in eine geschlossene Position, in welcher er die Passage der besagten elektromagnetischen Strahlung im Bereich des Durchgangsbereichs (4) verhindert; und
- einer aktivierbaren Steuereinheit (6), welche gleichzeitig das besagte Beleuchtungsmodul (2) und den besagten Verschluss (5) steuert und die Generation von Laserimpulsen durch das Beleuchtungsmodul (2), sowie die Öffnung des Verschlusses (5) synchronisiert, derart, dass besagter Verschluss (5) in eine geöffnete Position gebracht wird, eine einstellbare Verzugszeit nach der Laserimpulsgeneration, all dies während einer einstellbaren Öffnungsdauer,
**dadurch gekennzeichnet, dass** wenigstens das besagte Beleuchtungsmodul (2), der besagte Verschluss (5) und die besagte Steuereinheit (6) Teil eines Ensembles (12) sind, welches eines mechanische Integrität bildet und dadurch; dass besagtes Laser-Beleuchtungsmodul (1) darüber hinaus Befestigungsmittel (16) enthält, die geeignet sind, das besagte Ensemble (12) an der Kamera (15) zu befestigen.

2. Vorrichtung aus Anspruch 1, **dadurch gekennzeichnet, dass** besagtes Beleuchtungsmodul (2) ein Erzeugungsmittel (13) in der Form eines Laserstrahls umfasst.

3. Vorrichtung aus einem der Ansprüche 1 und 2, **dadurch gekennzeichnet, dass** sie darüber hinaus über Schnittstellenmittel (10A, 10B, 10C) verfügt, die einem Bediener ermöglichen, die Steuereinheit (6) zu aktivieren und das Laser-Beleuchtungsmodul (1) zu parametrieren.

4. Vorrichtung aus Anspruch 3, **dadurch gekennzeichnet, dass** besagte Schnittstellenmittel (10A) Teil des besagten Ensembles (12) sind, das eine mechanische Integrität darstellt.

5. Vorrichtung aus Anspruch 3, **dadurch gekennzeichnet, dass** besagte Schnittstellenmittel (10B, 10C) in Bezug auf besagtes Ensemble (12), das eine mechanische Integrität darstellt, deportiert sind.

6. Vorrichtung aus einem beliebigen der vorstehenden Ansprüche, **dadurch gekennzeichnet, dass** sie Mittel enthält, um den besagten Verschluss (5) in die geöffnete Position zu bringen und dort zu halten.

7. Ein aktives Observationssystem, umfassend eine Kamera (15), die ein Bild eines Blickfelds aufnehmen kann, **dadurch gekennzeichnet, dass** sie, darüber hinaus, eine Laserbeleuchtungsvorrichtung (1) umfasst, wie in einer beliebigen der Ansprüche 1 bis 6 spezifiziert, und dadurch, dass besagte Laserbeleuchtungsvorrichtung (1) derart konfiguriert ist, dass besagte Kamera (15) ein Bild über den Durchgangsbereich (4) des Verschlusses (5) eines Blickfelds aufnimmt, das von besagtem Beleuchtungsmodul (2) beleuchtet werden kann.

8. System aus Anspruch 7, **dadurch gekennzeichnet, dass** es Mittel (16) umfasst, um besagte Laserbeleuchtungsvorrichtung (1) auf besagter Kamera (15) zu befestigen.

9. System aus einem der Ansprüche 7 und 8, **dadurch gekennzeichnet, dass** besagte Schnittstellenmittel (10C) Teil einer Schnittstelleneinheit (17) der besagten Kamera (15) sind.

10. System aus Anspruch 9, **dadurch gekennzeichnet, dass** besagte Schnittstelleneinheit (17) deportiert ist.

11. System aus einem beliebigen der Ansprüche 7 bis 10, **dadurch gekennzeichnet, dass** besagter Verschluss (5) geeignet ist, Öffnungen kurzer Dauer zu generieren, derart, dass der Kamera (15) eine Funktion für mehrfache kurzzeitige Belichtungen bereitgestellt wird.

## Claims

1. Laser illumination device with integrated shutter designed to be connected to an independent camera (15), said device (1) comprising:
• a controllable illumination module (2) comprising at least one laser source (3) capable of emitting at least one laser pulse;
• a controllable high-speed shutter (5) which can be moved alternatively into an open position in which it allows electromagnetic radiation comprising at least said laser pulse to pass through a passageway (4), and into a closed position in which it prevents the passage of said electromagnetic radiation through said passageway (4); and
• an activatable control unit (6), which controls said illumination module (2) and said shutter (5) simultaneously, and which synchronises the generation of laser pulses by the illumination module (2) and the opening of the shutter (5) so as to move said shutter (5) into the open position, an adjustable time lag after the generation of a laser pulse, and this over an adjustable opening period,
**characterized in that** at least said illumination module (2), said shutter (5) and said control unit (6) form part of an assembly (12) having mechanical integrity, and **in that** said laser illumination device (1) also comprises attachment means (16) capable of attaching said assembly (12) to the camera (15).

2. Device according to claim 1,
**characterized in that** said illumination module (2) comprises a means (13) for generating the shape of the laser beam.

3. Device according to claim one of claims 1 and 2,
**characterized in that** it also comprises interface means (10A, 10B, 10C) allowing an operator to activate the control unit (6) and set the laser illumination device (1).

4. Device according to claim 3,
**characterized in that** said interface means (10A) form part of said assembly (12) having mechanical integrity.

5. Device according to claim 3,
**characterized in that** said interface means (10B, 10C) are offset in relation to said assembly (12) having mechanical integrity.

6. Device according to any one of the preceding claims ,
**characterized in that** it comprises means for moving said shutter (5) into said open position and keeping it there.

7. Active observation system comprising a camera (15) capable of capturing the image of a field of vision,
**characterized in that** it also comprises a laser illumination device (1) as specified in any one of claims 1 to 6 and **in that** said laser illumination device (1) is configured such that said camera (15) captures an image, through the passageway (4) of the shutter (5), of a field of vision that can be illuminated by said illumination module (2).

8. System according to claim 7,
**characterized in that** it comprises means (16) for attaching said laser illumination device (1) onto said camera (15).

9. System according to one of the claims 7 and 8,
**characterized in that** said interface means (10C) form part of an interface unit (17) of said camera (15).

10. System according to claim 9,
**characterized in that** said interface unit (17) is offset.

11. System according to any one of claims 7 to 10, **characterized in that** said shutter (5) is able to generate openings for a short period so as to provide the camera (15) with a function of short multiple exposures.
